# EUROPÄISCHE PATENTANMELDUNG

(11) **EP 1 897 762 A1**
(43) Veröffentlichungstag der Anmeldung: **12.03.2008**
(21) Anmeldenummer: 07022938.0
(22) Anmeldetag: 20.01.2006
(51) Int. Cl.: B60R 21/16

(54) **Gassackmodul für ein Fahrzeuginsassen-Rückhaltesystem**

(30) Priorität: 20.01.2005 DE 202005000924 U
(62) Teilanmeldung aus: 06001215.0
(71) Anmelder: TRW Automotive Safety Systems GmbH, 63743 Aschaffenburg (DE)
(72) Erfinder: Die Erfindernennung liegt noch nicht vor
(74) Vertreter: Strass, Jürgen

(57) **Zusammenfassung**

Ein Gassackmodul für ein Fahrzeuginsassen-Rückhaltesystem umfaßt ein Gehäuse, einen im Gehäuse untergebrachten Gassack (12), der eine Gassackwand (16) aufweist, und eine Abströmeinrichtung (18). Die Abströmeinrichtung (18) weist ein über eine Steuereinheit (20) aktivierbares energetisches Element (22) zur selektiven Bereitstellung einer Abströmöffnung auf. Die Abströmöffnung wird durch Materialumwandlung des energetischen Elements (22) bereitgestellt. Das energetische Element (22) ist ein mit einem explosiven oder pyrotechnischen Material (34) imprägniertes Gewebeteil (32).

## Beschreibung

Die Erfindung betrifft ein Gassackmodul für ein Fahrzeuginsassen-Rückhaltesystem, mit einem Gehäuse, einem im Gehäuse untergebrachten Gassack, der eine Gassackwand aufweist, und einer Abströmeinrichtung, wobei die Abströmeinrichtung ein über eine Steuereinheit aktivierbares energetisches Element zur selektiven Bereitstellung einer Abströmöffnung aufweist und die Abströmöffnung durch Materialumwandlung des energetischen Elements bereitgestellt wird.

Ein Gassackmodul, bei dem ein Abströmbereich in der Gassackwand geöffnet werden kann, wenn eine Verringerung des Gassackinnendrucks erwünscht ist, ist aus der WO-A-2004/045919 bekannt. Eine pyrotechnische Ladung in Form einer Sprengschnur ist direkt auf dem Abströmbereich angebracht, so daß der Abströmbereich nach Zündung der Sprengschnur durchbrennt oder mechanisch aufgerissen wird.

Sprengschnüre zur Erzeugung von Abströmöffnungen werden auch bei dem aus der GB-A-2 329 364 bekannten Gassackmodul verwendet. Hier werden bestimmte Bereiche eines Reaktionsbehälters, eines Manifolds oder eines Gasgenerators durchgebrannt.

Bei dem in der GB-A-2 306 409 gezeigten Gassackmodul ist eine Abströmöffnung des Gassacks durch eine Scheibe verschlossen. Eine auf der Scheibe angeordnete pyrotechnische Ladung brennt einen geschwächten Abschnitt der Scheibe durch, so daß eine Klappe gebildet wird. Die Klappe kann sich durch den Gassackinnendruck öffnen und die Abströmöffnung freigeben.

Die DE-A-102 21 659 zeigt ein Gassackmodul, bei dem eine Abströmöffnung gebildet wird, nachdem der Gassack seine Schutzfunktion erfüllt hat. Die Abströmöffnung wird dadurch erzeugt, daß ein Bereich des Gassackgewebes durch Erhitzen eines Glühdrahts geschmolzen wird.

Ein Gassackmodul mit den Merkmalen des Oberbegriffs des Anspruchs 1 ist aus der US 2004/0056459 A1 bekannt. Bei diesem Gassackmodul wird eine Abströmöffnung durch Aufschmelzen oder Erweichen einer Membran mittels eines Heizelements oder -mechanismus bereitgestellt.

Weitere Gassackmodule, bei denen eine Abströmöffnung durch Materialumwandlung eines energetischen Elements bereitgestellt wird, sind in der EP 0 638 466 A1, der US 5 518 269 A (jeweils Schmelzen und/oder Verbrennen eines Gewebeteils durch das erzeugte heiße Gas), der US 6 705 642 B1 (Schmelzen oder Verdampfen eines Verschlußelements) und der US 6 811 183 B1 (Abbrennen einer explosiven Beschichtung) gezeigt.

Die Erfindung schafft ein Gassackmodul, das ein rasches und kontrolliertes Bereitstellen einer Abströmöffnung ermöglicht.

Gemäß der Erfindung ist bei einem Gassackmodul der eingangs genannten Art vorgesehen, daß das energetische Element mit einem explosiven oder pyrotechnischen Material imprägniertes Gewebeteil ist.

Die Bereitstellung einer Abströmöffnung im Sinne der Erfindung beinhaltet die primäre Erzeugung einer Abströmöffnung oder die Freigabe oder Vergrößerung einer bereits vorhandenen Abströmöffnung in der Gassackwand oder in einem festen Bauteil des Gassackmoduls (Gehäuse, Gasgenerator, Abdeckkappe etc.). Unter einem energetischen Element ist gemäß der Erfindung ein aktivierbares, energiefreisetzendes Gewebeteil zu verstehen, das sich nach seiner Aktivierung (Zünden, Anzünden, initiieren) selbst durch Detonation, Abbrennen, Schmelzen oder dergleichen umwandelt (und ggf. auch benachbartes Material zerstört oder schädigt), um so eine Abströmöffnung zu erzeugen, freizulegen oder zu vergrößern.

Vorteilhafte und zweckmäßige Ausgestaltungen des erfindungsgemäßen Gassackmoduls ergeben sich aus den Unteransprüchen.

Die Erfindung wird nachfolgend anhand von beispielhaften Ausführungsformen unter Bezugnahme auf die beigefügten Zeichnungen beschrieben. In den Zeichnungen zeigen schematisch:
Figur 1 ein erfindungsgemäßes Gassackmodul mit einem entfalteten Gassack im Belastungsfall;
Figuren 2 bis 5 nicht-erfindungsgemäße Ausführungsformen der Abströmeinrichtung; und
Figuren 5 und 6 erfindungsgemäße Ausführungsformen der Abströmeinrichtung.

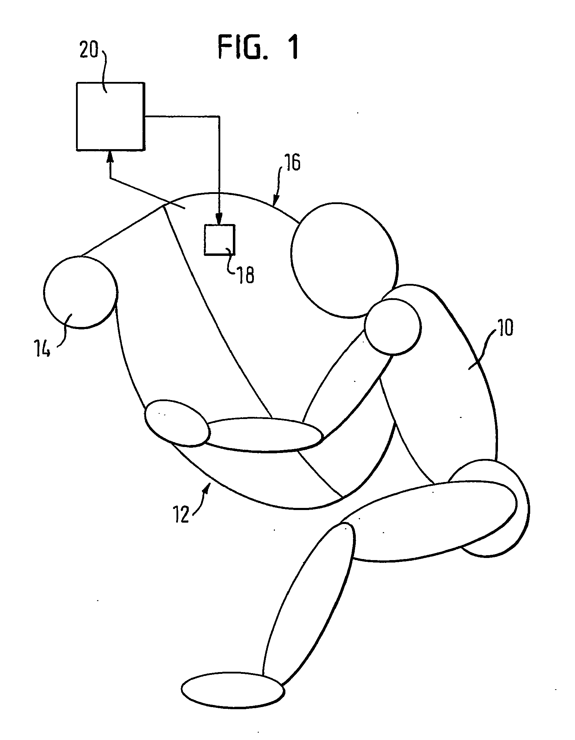

In Fig. 1 ist ein Fahrzeuginsasse 10 dargestellt, der in einen aufgeblasenen Gassack 12 eines Fahrzeuginsassen-Rückhaltesystems eintaucht. Der Gassack 12, der sich aus dem Gehäuse eines Gassackmoduls 14 heraus entfaltet hat, hat eine Gassackwand 16, an der eine elektrisch ansteuerbare Abströmeinrichtung 18 angeordnet ist. Die Abströmeinrichtung 18 dient zur selektiven Bereitstellung einer Abströmöffnung, durch die Gas aus dem Gassack 12 entweichen kann. Die Abströmeinrichtung 18 weist ein energetisches Element auf, das direkt oder indirekt mit einer elektronischen Steuerung 20 verbunden ist, d.h. das energetische Element 18 ist durch die elektronische Steuerung 20 aktivierbar.

Bei der nachfolgenden Beschreibung nicht-erfindungsgemäßer und erfindungsgemäßer Ausführungsformen werden für funktionsgleiche oder -ähnliche Teile die gleichen Bezugszeichen verwendet.

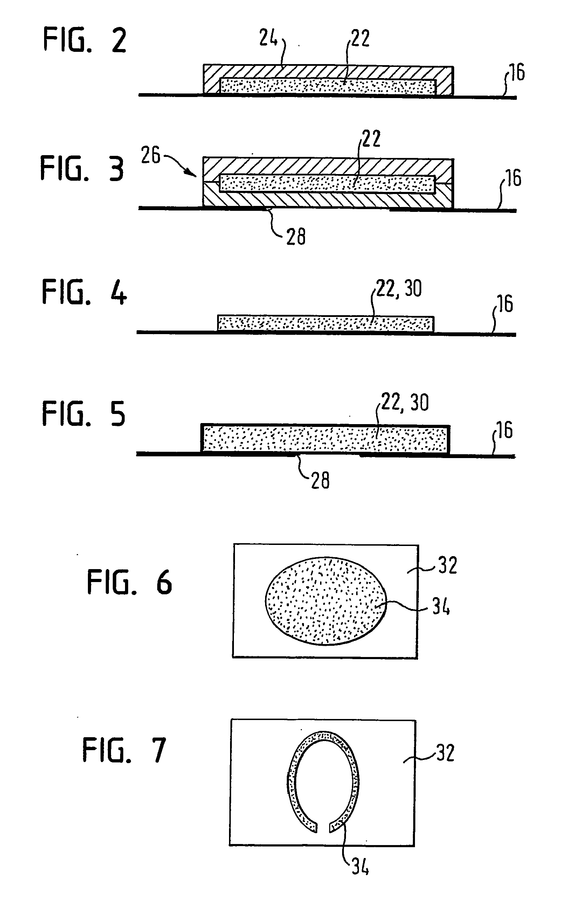

Fig. 2 zeigt den prinzipiellen Aufbau einer nicht-erfindungsgemäßen Abströmeinrichtung 18. An einer geeigneten Stelle ist unmittelbar auf der Gassackwand 16 ein energetisches Element 22 in Form eines explosiven, pyrotechnischen (brennbaren), oder mit hoher Geschwindigkeit schmelzenden Materials aufgebracht, das von einer Schutzschicht 24 abgedeckt ist. Die Schutzschicht 24 kann z.B. ein an seinem Rand mit der Gassackwand 16 vernähter Gewebelappen oder eine unmittelbar auf dem energetischen Element 22 aufgebrachte Beschichtung sein. Als energetisches Element 22 kann auch eine Zündpille oder dergleichen verwendet werden. Die elektrische Zuleitung, über die die Abströmeinrichtung mit der elektronischen Steuerung 20 verbunden ist, ist hier nicht dargestellt.

Bei Aktivierung der Abströmeinrichtung 18 wird das energetische Element 22 gezündet, angezündet bzw. initiiert, was zu einer Schädigung oder sofortigen Zerstörung der benachbarten Gassackwand 16 durch (Auf-)Sprengen, Verbrennen oder Schmelzen führt. Auf diese Weise wird eine Abströmöffnung in der Gassackwand 16 geschaffen, durch die Gas aus dem Gassack 12 austreten kann.

Bei der in Fig. 3 gezeigten Variante ist das energetische Element 22 Teil einer vorkonfektionierten Einheit 26, die auf der Gassackwand 16 in geeigneter Weise befestigt ist, z.B. durch Einnähen oder Kleben. Die vorkonfektionierte Einheit 26 kann z.B. ein Gewebeteil, ein Kunststoff-/Silikon-Teil oder eine Folie umfassen, in das bzw. die ein energetisches Element 22 integriert ist. Die vorkonfektionierte Einheit 26 ist so angeordnet, daß sie eine bereits in der Gassackwand 16 vorhandene Abströmöffnung 28 zumindest teilweise überdeckt. In diesem Fall wird durch die Aktivierung der Abströmeinrichtung 18 insbesondere der die Abströmöffnung 28 überdeckende Teil der vorkonfektionierten Einheit 26 soweit geschädigt oder zerstört, daß dadurch die Abströmöffnung 28 zumindest teilweise freigegeben wird.

Fig. 4 zeigt eine weitere nicht-erfindungsgemäße Ausführungsform, bei der ein bestimmter Bereich der Gassackwand 16 aus einem besonderen Gewebeteil 30 gebildet ist. Das Gewebeteil 30, das bei dieser Ausführungsform das energetische Element 22 darstellt, besteht aus einem explosiven oder brennbaren Material, z.B. einem Salpetersäureester eines Gewebematerials. So kann durch Zünden bzw. Anzünden des Gewebeteils 30 unmittelbar eine Abströmöffnung in der Gassackwand 16 erzeugt werden.

Bei der in Fig. 5 gezeigten Variante ist, ähnlich wie bei der Variante der Fig. 3, bereits eine Abströmöffnung 28 in der Gassackwand 16 gebildet. Die Abströmöffnung 28 ist durch ein separates, in geeigneter Weise auf der Gassackwand 16 befestigtes Gewebeteil 30 mit den zuvor beschriebenen Eigenschaften überdeckt. Die Zerstörung des Gewebeteils 30 durch Detonation bzw. Verbrennen legt die Abströmöffnung 28 frei.

Die Figuren 6 und 7 zeigen eine erfindungsgemäße Ausführungsform der Erfindung. Ein bestimmter Bereich eines Gewebeteils 32 ist mit einem explosiven oder pyrotechnischen Material 34 imprägniert. Durch flächiges Auftragen des Materials (Fig. 6) wird der gesamte imprägnierte Bereich zur Abströmöffnung. Das Material 34 kann aber auch wie in Fig. 7 gezeigt so aufgetragen werden, daß eine (Klappe) im Gewebeteil 32 entsteht. Wie bei den zuvor beschriebenen Ausführungsformen kann das Gewebeteil 32 wiederum Teil der Gassackwand 16 oder ein separates Gewebeteil sein, das eine in der Gassackwand 16 gebildete Abströmöffnung 28 überdeckt. Gemäß der Erfindung kann auch vorgesehen sein, daß das Gehäuse oder andere feste Bauteile des Gassackmoduls 14 ein oder mehrere energetische Elemente 22 als Bestandteil(e) aufweisen.

Die beschriebenen Maßnahmen zur selektiven Bereitstellung einer Abströmöffnung bzw. Einzelheiten dieser Maßnahmen sind im Ermessen des Fachmanns auch untereinander kombinierbar.

## Patentansprüche

1. Gassackmodul für ein Fahrzeuginsassen-Rückhaltesystem mit einem Gehäuse, einem im Gehäuse untergebrachten Gassack (12), der eine Gassackwand (16) aufweist, und einer Abströmeinrichtung (18), wobei die Abströmeinrichtung (18) ein über eine Steuereinheit (20) aktivierbares energetisches Element (22) zur selektiven Bereitstellung einer Abströmöffnung aufweist und die Abströmöffnung durch Materialumwandlung des energetischen Elements (22) bereitgestellt wird, **dadurch gekennzeichnet, daß** das energetische Element (22) ein mit einem explosiven oder pyrotechnischen Material (34) imprägniertes Gewebeteil (32) ist.

2. Gassackmodul nach Anspruch 1, **dadurch gekennzeichnet, daß** das energetische Element (22) unmittelbar auf der Gassackwand (16) aufgebracht ist.

3. Gassackmodul nach Anspruch 1 oder 2, **dadurch gekennzeichnet, daß** das energetische Element (22) durch eine Schutzschicht (24) abgedeckt ist.

4. Gassackmodul nach einem der vorhergehenden Ansprüche, **dadurch gekennzeichnet, daß** das energetische Element (22) Teil einer auf der Gassackwand (16) aufgebrachten vorkonfektionierten Einheit (26) ist.

5. Gassackmodul nach Anspruch 4, **dadurch gekennzeichnet, daß** die vorkonfektionierte Einheit (26) eine in der Gassackwand (16) gebildete Abströmöffnung (28) zumindest teilweise überdeckt.

6. Gassackmodul nach einem der vorhergehenden Ansprüche, **dadurch gekennzeichnet, daß** das energetische Element (22) Teil der Gassackwand (16) ist.

7. Gassackmodul nach einem der vorhergehenden Ansprüche, **dadurch gekennzeichnet, daß** das Material (34) flächig aufgetragen ist und der so imprägnierte Bereich die Abströmöffnung bildet.

8. Gassackmodul nach einem der Ansprüche 1 bis 6, **dadurch gekennzeichnet, daß** das Material (34) so aufgetragen ist, daß eine Klappe im Gewebeteil (32) entsteht.
